# EUROPÄISCHE PATENTSCHRIFT

(11) **EP 1 984 281 B1**
(45) Veröffentlichungstag und Bekanntmachung des Hinweises auf die Patenterteilung: **08.04.2015**
(21) Anmeldenummer: 07711481.7
(22) Anmeldetag: 09.02.2007
(51) Int. Cl.: B65G 1/137

(54) **VERFAHREN ZUM AUTOMATISCHEN KOMMISSIONIEREN ODER KONSOLIDIEREN VON ARTIKELN**
METHOD OF AUTOMATICALLY ORDER-PICKING OR CONSOLIDATING ARTICLES
PROCÉDÉ POUR PRÉPARER OU REGROUPER AUTOMATIQUEMENT DES ARTICLES POUR DES COMMANDES

(30) Priorität: 16.02.2006 AT 2412006
(43) Veröffentlichungstag der Anmeldung: 29.10.2008
(73) Patentinhaber: Salomon Automation GmbH, 8114 Friesach (AT)
(72) Erfinder: BURGSTALLER, Albert, A-8114 Friesach (AT); GRUBER, Michael, A-8184 Anger (AT); BAUER-KIESLINGER, Franz, A-8010 Graz (AT)
(74) Vertreter: Schweinzer, Friedrich
(86) Internationale Anmeldenummer: PCT/EP2007/001112
(87) Internationale Veröffentlichungsnummer: WO 2007/124796

(56) Entgegenhaltungen:
- EP-A1- 0 627 371
- EP-A1- 1 462 393
- EP-A2- 0 244 805
- AT-B- 403 156
- DE-A1- 3 100 020
- DE-A1- 3 343 858
- DE-U1- 20 211 321
- US-A- 5 007 521
- US-A- 5 642 803

## Beschreibung

Die Erfindung betrifft ein Verfahren zum automatischen Kommissionieren oder Konsolidieren von Artikel unterschiedlichsten Formates und Sortimentes.

In klassischen, manuellen Kommissioniersystemen werden alle Artikelpaletten/- gebinde auf Bodenplätzen oder Regalen entlang definierter Kommissioniergänge zur Kommissionierung bereitgestellt. Zur Auftragszusammenstellung (Kommissionierung) fährt bzw. geht der Mitarbeiter entlang des Kommissionierweges und ladet (kommissioniert) die durch den Auftrag vorgegebenen Kommissionierpositionen (Entnahmemengen) auf das mitgeführte Ladehilfsmittel (Palette, Rollcontainer, Behälter, Karton, ...). Nach Fertigstellung des Kommissionierauftrages wird das beladene Ladehilfsmittel in der Warenausgangszone der Verladung resp. der weiteren Bearbeitung bereitgestellt. Das Prinzip der inversen Kommissionierung beruht darauf, dass die Ladehiffsmittel, auf die die einzelnen Lieferaufträge geladen werden, an fixen Positionen bereitgestellt werden und der Mitarbeiter fährt mit den Artikelpaletten (Quellpaletten) entlang der auftragsbezogenen Ladehilfsmittel und kommissioniert von der Artikelpalette (Quellpalette) auf das fix positionierte und auftragsbezogene Ladehilfsmittel (Artikelpalette wird bewegt - auftragsbezogene Zielgebinde "ruhen"). Derartige Verfahren sind z.B. aus der EP 1 462 393 bekannt. Wird jedoch ein Gut, das aufgrund von Randbedingungen (Gewicht, Stabilität des Zielgebindes) am Zielgebinde weit unten gelagert werden muss, erst später zur Verteilung angeliefert, können auch die übrigen Positionen des Auftrages noch nicht richtig kommissioniert werden und müssen daher gegebenenfalls zwischengelagert werden. Auch bei der US 5 642 803, der AT 403 156 und der US 5 007 521 können die Artikel nur in der Reihenfolge der Anlieferung gelagert werden, sodass Artikel die erst später angeliefert werden nicht in der richtigen Reihenfolge berücksichtigt werden können.

Diesen Nachteil möchte die Erfindung beheben und eine schnellere Kommissionierung ermöglichen, wobei jeder einzelne Schritt auch automatisiert werden kann.

Die Erfindung weist daher die Schritte des Anspruchs 1 auf.

Dadurch kann der sonst notwendige Sortiervorgang vor dem Palletieren entfallen und es kann auch bei unterschiedlich großen Aufträgen das Regal optimal genutzt werden. Dadurch, dass die einzelnen Artikel in unmittelbarer Nähe im Regalfeld eingelagert werden, wobei sie direkt übereinander, nebeneinander, einfach- oder mehrfachtief sortiert eingelagert werden können, ist jederzeit eine genaue Zuordnung möglich und bei der Auslagerung sind nur kurze Wege erforderlich.

Eine günstige Ausgestaltung der Erfindung ist dadurch gekennzeichnet, dass die Artikel auf Trays gelagert werden. Damit können auch mehrere Artikel gemeinsam gelagert und transportiert werden. Auch ist ein standardisierter Transport durch übliche Vorrichtungen leicht möglich.

Eine besonders günstige Weiterbildung ist dadurch gekennzeichnet, dass die Auslagerung mit dem untersten Tray bzw. Gebinde beginnt, wobei die Auslagerung jeweils mit dem nächst höher gelagerten Gebinde fortfahren kann. Dadurch kann das Auslagerungshilfsmittel alle zu einem Auftrag gehörenden Trays bzw. Gebinde einfach entnehmen, ohne sich wieder in eine Ruheposition bewegen zu müssen. Dies führt zu sehr hohen Auslagerungsleistungen.

Eine vorteilhafte Ausgestaltung der Erfindung ist dadurch gekennzeichnet, dass die ausgelagerten Gebinde direkt dem Ausliefergebinde zugeführt werden. Durch die entsprechende Aufbereitung kann das Ausliefergebinde ohne weitere Sortierung oder Zwischenlagerung der Artikel direkt beladen werden.

Die Erfindung kann auch vorteilhaft bei der Konsolidierung von Aufträgen eingesetzt werden. In diesem Fall werden Artikel, die bereits durch andere Verfahren kommissioniert wurden entsprechend den Aufträgen in das Regalfeld eingelagert und ebenfalls entsprechend der vorgesehenen Anordnung im Auftragsgebinde im Regalfeld abgelegt. Damit können dann Aufträge, deren Artikel durch verschiedenste Kommissionierverfahren zusammengestellt wurden gemeinsam in der gewünschten Reihenfolge dem Auftragsgebinde zugeführt werden. So lassen sich auch sogenannte schnelldrehende Artikel mit sogenannten langsamdrehenden Artikeln oder mit händisch zu kommissionierenden Artikeln gemeinsam einem Auftrag zuordnen und den entsprechenden Auftragsgebinden zuführen. Eine sonst gegebenenfalls erforderliche Depalletierung entfällt natürlich für die bereits kommissionierten Artikel.

Die Erfindung wird nun anhand der Zeichnungen beispielhaft beschrieben, wobei Fig. 1 ein Schema einer konventionellen manuellen inversen Kommissionierung, Fig. 2 den schematischen Ablauf der erfindungsgemäßen Kommissionierung, Fig. 3a bis Fig. 3e Varianten der Beladung der Tays, Fig. 4 ein Regal, Fig. 5 ein Regal mit Regalbediengerät und Fig. 6 eine alternative Ausführung, die kein Teil der Erfindung ist, darstellt.

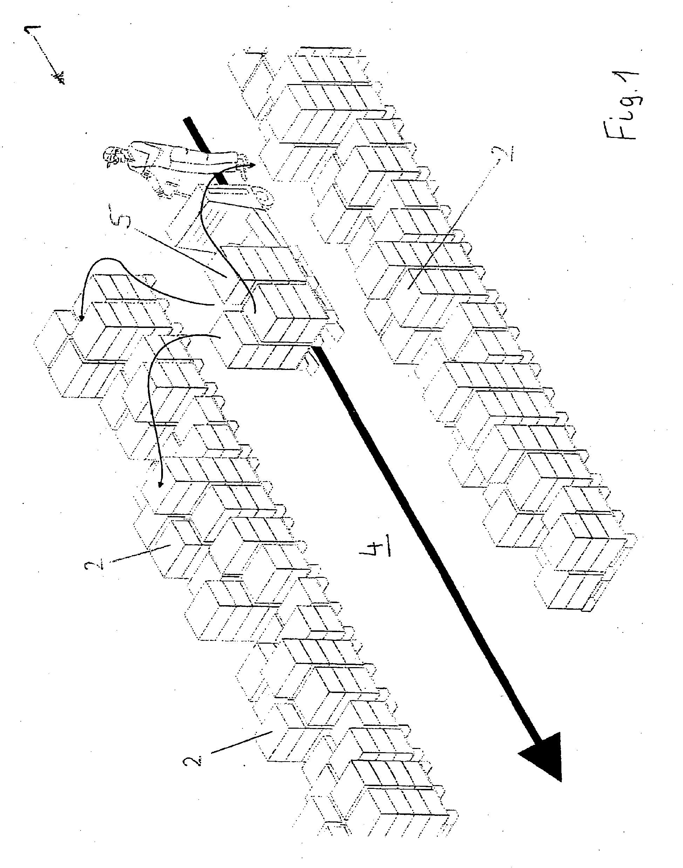

Fig. 1 zeigt das herkömmliche inverse Kommissionierverfahren, bei dem in einem Lager 1 alle Auftragspaletten bzw. - gebinde 2 auf Bodenplätzen oder gegebenenfalls in Regalen entlang definierter Kommissioniergänge 4 bereitgestellt werden. Zur Auftragszusammenstellung (Kommissionierung) fährt bzw. geht der Mitarbeiter entlang des Kommissionierweges 4 und teilt die Artikel 5 auf die einzelnen Aufträge bzw. denen zugeordneten Auftragspaletten bzw.-gebinde 2 auf. Nach Fertigstellung des Kommissionierauftrages wird die beladene Auftragspalette bzw. -gebinde 2 in der Warenausgangszone der Verladung resp. der weiteren Bearbeitung bereitgestellt. Das Prinzip der inversen Kommissionierung beruht darauf, dass die Ladehiffsmittel (Auftragspaletten 2), auf die die einzelnen Lieferaufträge geladen werden, an fixen Positionen bereitgestellt werden und der Mitarbeiter fährt mit den Quellpaletten, die jeweils eine Artikelart enthalten, auf den Kommissioniergängen 4 entlang der auftragsbezogenen Ladehitfsmittel 2 und kommissioniert von der Quellpalette auf das fix positionierte und auftragsbezogene Ladehilfsmittel 2 (Quellpalette wird bewegt - auftragsbezogene Zielgebinde "ruhen").

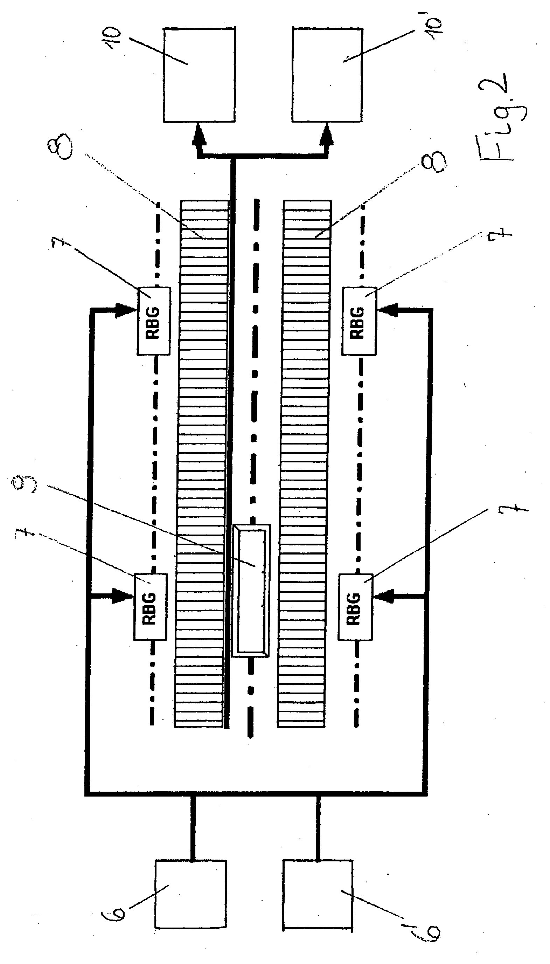

Ein Schematischen Ablauf einer Ausführungsform des Verfahrens der Erfindung ist in Fig. 2 dargestellt. Die angelieferten Artikel werden in einer automatischen Depalettierung 6 oder einer manuellen Depalettierung 6' vereinzelt und die einzelnen Artikelkolli mit einem oder mehreren Regalbediengeräten (RBG) 7 in ein Regal 8 eingelagert. Die Auslagerung erfolgt mit einem speziellen Kommissioniergerät 9, wobei die einzelnen Artikelkolli dann einer automatischen Palettierung 10 oder einer manuellen Palettierung 10' zugeführt werden, bei der dann das Auftragsgebinde fertiggestellt wird. Durch das Ein- und Auslagern des erfindungsgemäßen Verfahrens kann eine nachfolgende Sortierung vor der Palettierung entfallen. Das Kommissionierverfahren beruht darauf, dass die für die Auftragszusammenstellung (Kommissionierung) notwendigen Artikelpositionen Artikelkolli entweder für sich selbst automatisch manipulierbar und automatisch transportierbar sind sowie in einem konventionellen Behätterregal gelagert oder auf automatisch manipulierbare und transportierbare Ladehilfsmittel (Behälter, Trays) geladen werden können.

Die Vereinzelung der Artikelkolli resp. deren Umpacken auf definierte Ladungsträger (Trays) kann zum Einen im Vorfeld der Kommissionierung erfolgen, wobei die Trays in einem automatischen Kleinteilelager zwischengelagert werden (neutrale Lagerung). Sie kann, sofern die Lieferaufträge bekannt sind, auch unmittelbar vor dem Kommissionierprozess an einem Umpack- oder Depalletierplatz 6, 6' (automatisch oder manuell) auftragsbezogen erfolgen. Werden die Artikelkolli im Vorfeld ohne direkten Bezug zu Aufträgen vereinzelt oder auf definierte Ladungsträger umgepackt, so darf nur ein Kolli (kleinste Kommissioniereinheit pro Artikel) pro Ladungsträger geladen werden. Erfolgt die Vereinzelung unmittelbar vor der Kommissionierung bzw. die Aufträge sind zum Zeitpunkt der Vereinzelung bekannt, so können auch mehr als ein Kolli pro Ladungsträger geladen werden (max. die Menge an Kolli der betreffenden Lieferposition des Auftrages). Durch das auftragsbezogene Beladen der Trays mit einer Lieferposition wird die Kommissionierteistung des Gesamtsystems maximiert.

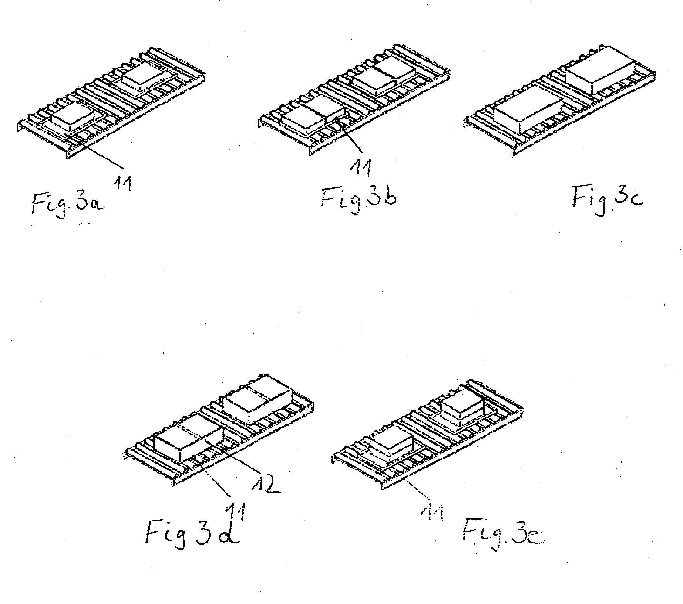

Fig. 3a bis Fig. 3e zeigen beispielhaft die Möglichkeiten der Beladung der einzelnen Trays 11 mit einem Kolli pro Tray 11 (Fig. 3a), mehreren Kolli pro Tray 11 (Fig. 3b), losen Kolli (Fig. 3c), mit mehreren Kolli beladenen Behältern 12 auf Trays 11 (Fig. 3d) sowie Kollistapel auf Trays 11 (Fig. 3e), je nach Art der Artikel und Anforderung des Auftrags.

Die Quellpaletten werden automatisch oder manuell dem Depalettierarbeitsplatz 6, 6' zugeführt. Der Depalettierarbeitsplatz kann automatisch 6 oder manuell 6' ausgeführt sein (abhängig von den physikalischen Eigenschaften der Artikelverpackung). Die am Depalettierplatz 6, 6' vereinzelten Artikelkolli werden automatisch oder manuell auf Systemtrays 11 geladen, wobei auch mehr als ein Kolli auf ein Tray 11 geladen werden kann. Die leeren Trays 11 werden über eine Förderanlage dem Depalettierarbeitsplatz 6, 6' automatisch zugeführt. Artikel, die auf Grund der physikalischen Eigenschaften keinen Tray 11 zur weiteren Manipulation bedürfen, werden am Depalettierarbeitsplatz 6, 6' entweder automatisch oder manuell vereinzelt und direkt an die abführende Fördertechnik, z.B. Rollen- oder Gurtförderer, übergeben (lose Artikelkolli).

Die von der Depalettierung resp. aus dem Pufferlager kommenden auftragsbezogenen beladenen Trays 11 oder losen Artikelkolli werden mittels automatischen Regalförderzeugen 7 in ein konventionelles Regal 8 für Behälter eingelagert wobei die "Einlagerstrategie", d.h. welcher beladene Tray 11 bzw. welcher lose Artikelkolli wo und wie gelagert wird, wesentlicher Bestandteil des erfindungsgemäßen Verfahrens darstellt. Das Regal 8 kann sowohl für einfachtiefe als auch für mehrfachtiefe Lagerung der Trays 11 resp. losen Artikelkolli ausgelegt sein.

Die Einlagerung der beladenen Trays 11/losen Artikelkolli 5 erfolgt nach einem durch das System vorab berechneten Beladungsmuster im Sinne der Beladungsreihenfolge des Ausliefergebindes (z.B. Rollcontainer, Palette, ...). Hierfür werden für die entstehenden auftragsbezogenen Ausliefergebinde fiktive Lagerzonen 13 mit einer sich aus der im Voraus berechneten Beladungsmenge und Beladungsreihenfolge ergebenden Anzahl Lagerplätze 14 reserviert. Die Größe, d.h. die Anzahl an Lagerplätzen 14, verändert sich dynamisch mit der Beladungsmenge für das jeweilige Ausliefergebinde, wodurch sich eine Optimierung des Füllgrades des Regals 8 ergibt. Das erfindungsgemäße Kommissionierverfahren sieht weiters vor, dass die zu einem auftragsbezogenen Ausliefergebinde (Rollcontainer, Palette, ...) zugehörigen Lieferpositionen (Trays mit Artikelkolli resp. lose Artikelkolli) in Lagerplätzen 14 eingelagert werden, die in unmittelbarer Nähe (übereinander, nebeneinander, etc.) angeordnet sind. Dabei entspricht die Lagerplatzkapazität eines fiktiven Lagerbereiches 13 der Beladung eines Ausliefergebindes.

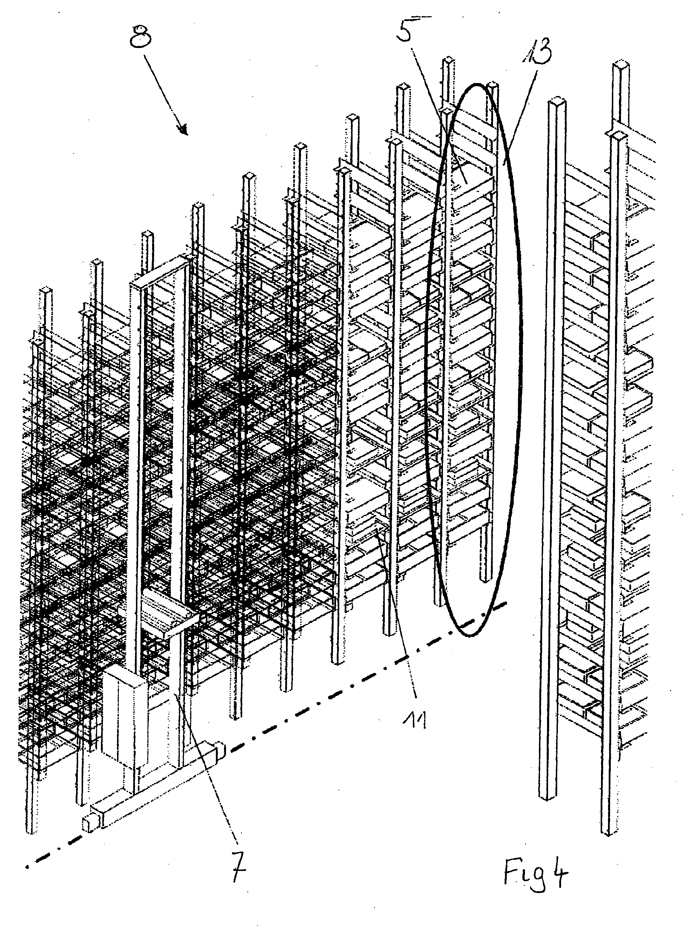

Fig. 4 zeigt nun ein Regal 8, bei dem die einzelnen Artikelkolli 5 durch ein Regalbediengerät 7 eingelagert werden. Ein wesentlicher Bestandteil des erfindungsgemäßen Kommissionierverfahrens ist die Auslagerung der auftragsbezogenen und in "fiktive" Lagerzonen 13 vorsortierten mit Artikeln 5 beladenen Trays 11 bzw. losen Artikelkolli 5. Die einem Ausliefergebinde zugehörigen Trays 11 oder losen Artikel 5 in einer Regalsäule werden direkt über-einander, einfach- oder mehrfachtief sortiert, eingelagert.

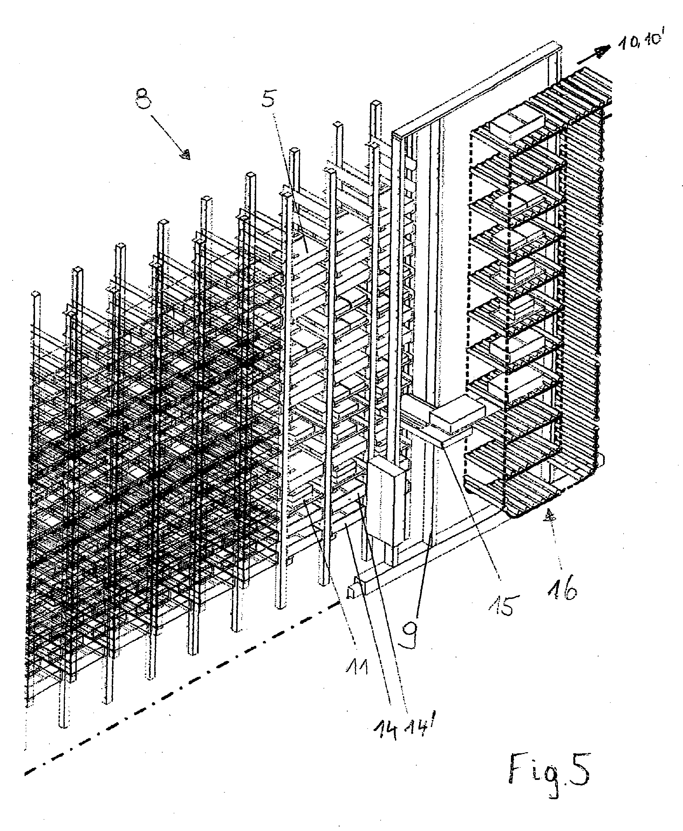

Fig. 5 zeigt die Auslagerung der mit den Artikeln 5 beladenen Trays 11/losen Artikelkolli 5. Dafür wird ein spezielles Regalbediengerät 9, das zum einen ein spezielles Lastaufnahmemittel 15 zur Aufnahme der mit Artikelkolli 5 beladenen Trays 11 / hosen Artikelkolli 5 verfügt, zum anderen einen leistungsstarken Senkrechtförderer 16 (Z-Förderer, Paternoster, o.ä.) als integralen Bestandteil ausweist, eingesetzt. Über das Lastaufnahmemittel 15 werden die mit Artikelkolli 5 beladenen Trays 11 resp. losen Artikelkolli 5 aus dem Regal 8 ausgelagert (entnommen) und über die auf dem Regalbediengerät 9 installierte Fördertechnik, z.B. Rollen- oder Gurtförderer, dem mitfahrenden Senkrechtförderer 16 übergeben. Dieser übergibt die Trays 11/losen Artikelkolli 5 an eine Förderanlage, über die der Weitertransport zur Palettierung 10, 10' erfolgt. Günstig bei der Erfindung ist es, wenn das Lastaufnahmemittel 15 zur Entnahme der Trays 11 / losen Artikelkolli 5 den untersten Lagerplatz 14 der "fiktivene" Lagerzone - die im gegebenen Augenblick genau einem Ausliefergebinde zugeordnet ist - unterfährt, die in dieser Ebene des Regals 8 gelagerten Trays 11 und / oder losen Artikelkolli 5 auslagert und anschließendohne das Lastaufnahmemittel 15 wieder in die "Ruheposition - Mittelposition" zu bewegen - nur durch eine Hubbewegung zum darüber liegenden Lagerplatz 14' hebt und die nächsten Trays 11/losen Artikelkolli 5 auslagert. Gleichzeitig werden die ausgelagerten Trays 11/losen Artikelkolli 5 über den Senkrechtförderer 16 in Richtung Palettierung 10, 10' transportiert. Durch dieses Verfahren werden sehr hohe Auslagerleistungen erzielt.

Die auf Ausliefergebinde zu palettierenden Kolli werden nach dem oben beschriebenen Verfahren ausgelagert und über eine automatische Förderanlage der Palettierung zugeführt. Vor dem Palettiervorgang müssen noch jene Lieferpositionen, die auf einem Tray geladen wurden, von diesem getrennt werden. Dieser Vorgang erfolgt automatisch oder manuell. Die Anlieferung der Kolli an den Palettierarbeitsplatz erfolgt in der für die Palettierung notwendigen Reihenfolge, wobei die Reihenfolge bereits im Lager gebildet wurde. Durch dieses Vorgehen entfallen die ansonsten notwendigen Sortiereinrichtungen. Auch wird das Ausliefergebinde nach den erforderlichen Randbedingungen (u.a. Gewicht, Stabilität) in einfacher Weise beladen.

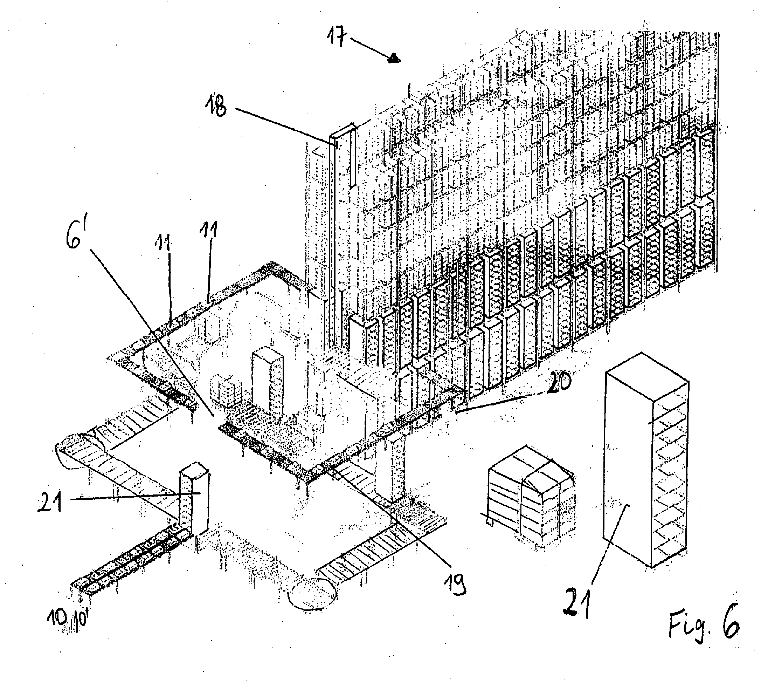

Fig. 6 zeigt eine alternative Ausführung, die kein Teil der Erfindung ist. Hier werden die Artikel aus einem Palettenlager 17 mit den zu kommissionierenden Artikeln mittels eines Regalbediengerätes 18 zu einem Depalettierplatz 6' (hier als manueller Arbeitsplatz dargestellt) gebracht und vereinzelt bzw. auf Trays 11 gelagert. Diese Trays 11 werden anschließend mittels Fördereinrichtungen 19 einem Regalbediengerät 20 zugeführt, das diese Trays 11 an die entsprechenden Positionen der Auftragstransporteinheiten 21 bringt. Die Auftragstransporteinheiten 21 sind in diesem Fall regalartig unterhalb des Palettenlagers 17 angeordnet, wodurch sich eine geringe erforderliche Steltfläche ergibt. Auch hier werden die Artikel bereits entsprechend den Aufträgen zugeordnet, so dass sich eine spätere Sortierung erübrigt. Die Auftragstransporteinheiten 21 werden dann mit einem Hebezeug, z.B. einem üblichen Gabelstapler oder automatischen Regalbediengerät (RBG), der Palettierung 10 bzw. 10' zugeführt. Durch geeignete Vorrichtungen kann auch hier die unterste Ebene zuerst der Palettierung 10, 10' zugeführt und dann die Auftragstransporteinheit 21 um eine Ebene in der Höhe verschoben werden, so dass anschließend die nächste Ebene entleert und weiterbearbeitet werden kann. Üblicherweise werden die schweren Artikel sowohl auf dem Auftragsgebinde, z.B. Palette, als auch in der Auftragstransporteinheit 21 unten gelagert, um die Stabilität zu gewährleisten. Durch die vorgesehene Art der Ein- und Auslagerung kann dies überall erreicht werden.

Durch die gewählte Aufstellung des Palettenlagers 17 über den Auftragstransporteinheiten 21 kann dieser Teil auch gut eingehaust werden und als Kühllager fungieren. Die Artikel müssen nur kurzzeitig über den Depalettierplatz 6 durch geeignete Schleusen in einen Raum mit etwas höherer Temperatur gebracht werden, bevor sie wieder im Kühlteil eingelagert werden. Auch die Palettierung auf Auftragsgebinde kann in einem abgeschlossenen Raum erfolgen, von dem die Aufträge dann direkt in den Kühlwagen gegeben werden können.

Derartige Anlagen und Systeme finden vor allem Anwendung bei der Kommissionierung oder Konsolidierung von Artikeln, die in größeren Einheiten, z.B. für den Einzelhandel oder für Supermärkte zusammengestellt sind. Speziell können dabei auch frische Produkte, wie z.B. Obst oder Gemüse, günstig kommissioniert werden.

Die Erfindung ist nicht auf die Beispiele der Zeichnungen beschränkt. Depalettier- und Palettierplatz können je nach Bedarf sowohl automatisch, als auch manuell gestaltet werden. Auch die Anordnung der Regale kann beliebig gewählt werden.

## Patentansprüche

1. Verfahren zum automatischen Kommissionieren oder Konsolidieren von Artikeln (5) unterschiedlichsten Formates und Sortimentes, mit den folgenden Schritten:
- Berechnung der Beladungsmuster im Sinne der Beladungsreihe der Ausliefergebinde der jeweiligen Aufträge;
- Reservierung für die Aufträge von fiktiven Lagerzonen (13) eines Regallagers (8) mit einer sich aus der im Voraus berechneten Betadungsmenge und Beladungsreihenfolge ergebenden Anzahl der Lagerplätze (14), wobei die reservierte Anzahl an Lagerplätzen (14) sich dynamisch mit der Beladungsmenge für das jeweilige Ausliefergebinde verändert;
- Lagerung der Artikel (5) in zugehörigen Lagerplätzen (14) des Regallagers (8), wobei die einzelnen Artikel (5) eines Auftrags in unmittelbarer Nähe in der jeweiligen Lagerzone (13) eingelagert werden, so dass die für einen Auftrag zusammenzustellenden Artikel (5) bereits in der Beladungsreihenfolge in der jeweiligen Lagerzone (13) zusammengestellt werden;
- Auslagerung der Artikel (5) in der für die Palettierung auf Ausliefergebinde notwendigen Beladungsreihenfolge;
- Anlieferung der Artikel (5) an einem Palettierarbeitsplatz (10, 10') in der Beladungsreihenfolge;
- Palettierung der Artikel (5) zur Bildung der Ausliefergebinde.

2. Verfahren nach Anspruch 1 , **dadurch gekennzeichnet, dass** die für einen Auftrag zusammenzustellenden Artikel (5) direkt übereinander in Regallager (8) eingelagert werden.

3. Verfahren nach Anspruch 1 , **dadurch gekennzeichnet, dass** die für einen Auftrag zusammenzustellenden Artikel (5) nebeneinander in Regallager (8) eingelagert werden.

4. Verfahren nach Anspruch 1 , **dadurch gekennzeichnet, dass** die für einen Auftrag zusammenzustellenden Artikel (5) einfach- oder mehrfachtief sortiert in Regallagen (8) eingelagert werden.

5. Verfahren nach einem der Ansprüche 1 bis 4 **dadurch gekennzeichnet, dass** die für einen Auftrag zusammenzustellenden Artikel (5) auf Trays (11) gelagert werden.

6. Verfahren nach einem der Ansprüche 1 bis 5, **dadurch gekennzeichnet, dass** die Auslagerung (9) mit dem untersten Tray (11) bzw. Artikel (5) in der Zugewiesenen Lagerzone (13) beginnt.

7. Verfahren nach Anspruch 6, **dadurch gekennzeichnet, dass** die Auslagerung (9) jeweils mit dem in der Zugewiesenen Lagerzone (13) nächst höher gelagerten Artikel (5) fortfährt.

8. Verfahren-nach Anspruch 7, **dadurch gekennzeichnet, dass** die ausgelagerten Artikel (5) direkt dem auftragsbezogenen Aüsliefergebinde zugeführt werden.

## Claims

1. Method for automatically commissioning or consolidating goods (5) of the most different shape and assortment, comprising the following steps:
- calculation of the loading patterns in terms of the loading sequence of the delivery packages for each purchase order;
- reservation of virtual storage zones (13) for the purchase orders in a high-rack store (8) having a certain number of storage places (14) corresponding to a certain loading quantity and loading sequence calculated in advance, where the reserved number of storage places (14) changes dynamically with the loading quantity for the delivery package concerned;
- storage of the goods (5) in the appropriate storage places (14) in the high-rack store (8), where the individual goods (5) for a purchase order are stored in immediate vicinity in each storage zone (13) so that the goods (5) that are to be assigned to a certain purchase order are arranged in the loading sequence already in the storage zone (13) concerned;
- removal from storage of the goods (5) in the loading sequence required for palletizing the delivery packages;
- transport of the goods (5) to a palletizing workplace (10, 10') in the loading sequence;
- palletizing of the goods (5) for forming the delivery packages.

2. Method according to Claim 1, **characterized by** the goods (5) which are to be assigned to a certain purchase order being stored directly on top of each other in the high-rack store (8).

3. Method according to Claim 1, **characterized by** the goods (5) which are to be assigned to a certain purchase order being stored alongside each other in the high-rack store (8).

4. Method according to Claim 1, **characterized by** the goods (5) which are to be assigned to a certain purchase order being stored in the high-rack store (8) assorted in a single row or in several rows.

5. Method according to one of Claims 1 to 4, **characterized by** the goods (5) which are to be assigned to a certain purchase order being stored on trays (11).

6. Method according to one of Claims 1 to 5, **characterized by** the removal from storage (9) beginning with the lowest tray (11) or good (5) in the assigned storage zone (13).

7. Method according to Claim 6, **characterized by** the removal from storage (9) being continued with the good (5) in the next higher position in the assigned storage zone (13).

8. Method according to Claim 7, **characterized by** the goods (5) removed being moved directly to the purchase-order-related delivery package.

## Revendications

1. Méthode pour la préparation de commandes ou la consolidation automatiques de marchandises (5) de forme et d'assortiment les plus divers, comprenant les étapes suivantes:
- calcul des profils de chargement en termes de la séquence de chargement des bidons de livraison pour chaque commande;
- réservation de zones de stockage (13) virtuelles pour les commandes dans un entrepôt à haut rayonnage (8) ayant un certain nombre de places de stockage (14) correspondant à une certaine quantité de chargement et séquence de chargement calculées préalablement, où le nombre de places de stockage (14) réservées change dynamiquement avec la quantité de chargement du bidon de livraison concerné;
- mise en stockage des marchandises (5) aux places de stockage (14) appropriées dans l'entrepôt à haut rayonnage (8), où les marchandises (5) individuelles relatives à une commande sont stockées à proximité immédiate dans chaque zone de stockage (13), de façon à ce que les marchandises (5) devant être attribuées à une certaine commande soient disposées dans la séquence de chargement déjà dans la zone de stockage (13) concernée;
- déstockage des marchandises (5) dans la séquence de chargement requise pour la palettisation des bidons de livraison;
- transport des marchandises (5) vers un poste de travail (10, 10') de palettisation dans la séquence de chargement;
- palettisation des marchandises (5) pour former les bidons de livraison.

2. Méthode selon la revendication 1, **caractérisée en ce que** les marchandises (5) devant être attribuées à une certaine commande sont stockées les unes directement au-dessus des autres dans l'entrepôt à haut rayonnage (8).

3. Méthode selon la revendication 1, **caractérisée en ce que** les marchandises (5) devant être attribuées à une certaine commande sont stockées les unes à côté des autres dans l'entrepôt à haut rayonnage (8).

4. Méthode selon la revendication 1, **caractérisée en ce que** les marchandises (5) devant être attribuées à une certaine commande sont stockées dans l'entrepôt à haut rayonnage (8) assorties soit en une seule rangée soit en plusieurs rangées.

5. Méthode selon l'une des revendications 1 à 4, **caractérisée en ce que** les marchandises (5) devant être attribuées à une certaine commande sont stockées sur des plateaux (11).

6. Méthode selon l'une des revendications 1 à 5, **caractérisée en ce que** le déstockage (9) se fait en commençant par le plateau (11) le plus bas ou la marchandise (5) la plus basse dans la zone de stockage (13) attribuée.

7. Méthode selon la revendication 6, **caractérisée en ce que** le déstockage (9) continue avec la marchandise (5) qui se trouve dans la position immédiatement supérieure dans la zone de stockage (13) attribuée.

8. Méthode selon la revendication 7, **caractérisée en ce que** les marchandises (5) déstockées sont amenées directement vers le bidon de livraison pour la commande en question.
